(19) Europäisches Patentamt
European Patent Office
Office européen des brevets

(11) Publication number : 0 029 100 B2

(12) NEW EUROPEAN PATENT SPECIFICATION

(45) Date of publication of the new patent specification : **15.01.92 Bulletin 92/03**

(21) Application number : **80105650.8**

(22) Date of filing : **19.09.80**

(51) Int. Cl.$^5$ : **C09D 183/04,** // C09J183/04 , (C09D183/04, C08L101:02, C08K5:10, 5:54)

# (54) Coating composition comprising compounds that contain silyl groups and a hydrolysable ester.

The file contains technical information submitted after the application was filed and not included in this specification

(30) Priority : **19.09.79 JP 121181/79**

(43) Date of publication of application : **27.05.81 Bulletin 81/21**

(45) Publication of the grant of the patent : **16.05.84 Bulletin 84/20**

(45) Mention of the opposition decision : **15.01.92 Bulletin 92/03**

(84) Designated Contracting States : **BE DE FR GB IT**

(56) References cited :
**EP-B- 0 007 765**
**DE-B- 2 507 362**
**GB-A- 1 054 140**
**GB-A- 1 250 414**

(56) References cited :
**GB-A- 1 461 531**
**US-A- 3 306 800**
**US-A- 3 903 052**
**US-A- 4 043 953**
**US-A- 4 157 321**

(73) Proprietor : **KANEGAFUCHI KAGAKU KOGYO KABUSHIKI KAISHA**
**2-4 Nakanoshima 3-chome**
**Kita-ku Osaka-shi Osaka-fu (JP)**

(72) Inventor : **Kato, Yasushi**
**1-11-3, Katayama-cho Nagata-ku**
**Kobe-shi Hyogo-ken (JP)**
Inventor : **Furukawa, Hisao**
**Sanseiso, 96-1 Aza-Takigahira Shioya-cho**
**Tarumi-ku Kobe-shi Hyogo-ken (JP)**
Inventor : **Nakatsuka, Saori**
**11-20, Hama-cho**
**Ashiya-shi Hyogo-ken (JP)**

(74) Representative : **Vossius & Partner**
**Siebertstrasse 4 P.O. Box 86 07 67**
**W-8000 München 86 (DE)**

EP 0 029 100 B2

## Description

This invention relates to a composition comprising a hydrolysable ester and a silyl groups-containing compound which hardens in the presence of moisture.

Compounds of the condensation type, which possess a hydrolytic group such as a hydroxy, an acetoxy, an alkoxy or an oxime group have been widely used for various technical fields such as paints, coatings, adhesives for rubbers or sealants. These compounds harden at room temperature either in the absence or in the presence of a catalyst when the hydrolytic group is properly selected. However, when the reactivity between the hydrolytic group and moisture is increased, the shelf stability tends to decrease.

Besides, it is difficult to keep these compounds completely free from moisture when storing them, whether they are pure or contained in a mixture or solution: in short, they gradually react with a trace of moisture and show an increase in viscosity. On the other hand, the penetration of moisture from the air into the compounds is inevitable when they are used very often and exposed repeatedly to the air.

Moreover, there is a strong likelihood that adsorption moisture from the surface of pigments or fillers penetrates into the compounds when compositions are prepared by blending several compounds; this sometimes causes gelation during blending if the moisture content becomes too high. Although the moisture adhering to such additives can be removed by previous heat-treatment, or by forming azeotropes in xylene, the respective process is actually not easily practicable.

US-A-4,157,321 discloses copolymers of an ethylenically unsaturated organic monomer and an unsaturated organosilane monomer which are stabilized against viscosity increase and gelation by the addition thereto of a monomeric hydrolytically reactive compound chosen from the group consisting of (i) monomeric hydrolytically reactive organosilanes and (ii) trialkyl orthoformates;and an alkyl alcohol.

According to US-A-4,043,953 the potlife of an ambient temperature, moisture-curable coating composition comprising an acrylic silane interpolymer which is devoid of active hydrogen atoms, and a cure-accelerating catalyst is increased by the addition to the composition of from about 0.5 percent to about 15 percent by weight of interpolymer solids of a monomeric hydrolytically reactive organosilicon compound represented by the structural formula:

$$X_nSi(OR)_{4-n}$$

wherein X is an organic radical having from 1 to 12 carbon atoms, R is methyl, ethyl, 2-methoxyethyl, 2-ethoxyethyl, or an acyl group containing 5 or less carbon atoms and n is 0, 1 or 2.

From GB-A-1,054,140 a process for stabilising a moisture-curable single component polyurethane lacquer containing a clear or pigmented polyurethane in an organic solvent or mixture of organic solvents is known which comprises adding a trialkyl orthoformate, tetraalkyl orthosilicate or trialkyl phosphite to the lacquer or to any of its constituents.

It is the object of the present invention to provide a coating composition comprising a hydrolysable ester and a polymeric compound having at least one silyl group, which composition shows a still further improved stability, while it is not restricted in respect of the vinyl monomers employed for the production of the silyl groups containing polymer.

In accordance with the present invention this object is achieved by a coating composition comprising an ester which hydrolyses in the presence of traces of moisture, and at least one compound which contains in its molecule at least one silyl group having the following general formula

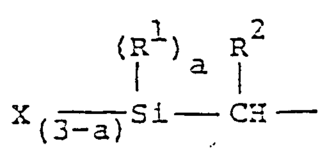

wherein $R^1$ and $R^2$ each represent a hydrogen atom or a monovalent alkyl, aryl and aralkyl group with 1 to 10 carbon atoms, X represents an alkoxy, hydroxy, acyloxy, aminoxy, phenoxy, thioalkoxy or amino group and a is 0, 1 or 2, which is characterized in that the silyl groups-containing compound is a polyester having a molecular weight of from 300 to 8,000, a vinyl polymer having a molecular weight of from 300 to 9,000, a diallyl phthalate prepolymer with a molecular weight of not more than 20,000 or a diallyl phthalate copolymer.

Examples of suitable diallyl phthalate copolymers are polymers containing diallyl phthalate and an acrylic or methacrylic ester. In these copolymers of prepolymers the content of diallyl phthalate is preferably from 5 to 100 mol %.

For example, trialkyl orthoformate, tetralkyl orthosilicate may be used as the hydrolysable esters of the present invention.

The silyl groups-containing compound may be produced essentially through an additional reaction between a silicon hydride and a compound having terminal C—C double bonds or C—C double bonds in the side chains in the presence of a platinum catalyst. Examples of compounds with terminal C—C double bonds or C—C double bonds in the side chains are (1) polyesters, (2) vinyl polymers, 13) diallyl phthalate compounds, (4) diallyl phthalate copolymers, all of which are suitable for producing paints, coatings, adhesives for rubbers, silane-coupling agents or sealants.

For examples, polyesters having C—C double bonds may be prepared by reacting a polyester with terminal hydroxy groups (e.g., products sold under the tradename "DESMOFEN" manufactured by Nihon Polyurethane Co., Ltd.) with acrylic chloride in the presence of a base such as sodium hydride. Secondly, the polyesters may also be obtained by condensation polymerization, in which allyl glycidyl ether, replaced partially for the diol component, is reacted with a dibasic acid that is usually used in an ester condensation polymerization. Thirdly, the polyesters may be prepared by transesterification between a diallyl ester, such as diallyl phthalate, and a polyester whose molecule ends are hydroxy groups in the presence of an appropriate catalyst such as toluene sulfonic acid. In the fourth place, the polyesters may be produced by reacting an excess amount of a dibasic acid with a diol, and adding allyl alcohol to the reaction system for esterification during or after the reaction. In the fifth place, the polyesters having allyl type C—C double bonds in their molecule may be obtained by reacting acid anhydrides with epoxy compounds and allyl alcohol in the presence of salts of tertiary amines or quaternary ammonium salts and introducing allyl radicals into the reaction product while simultaneously controlling its molecular weight with the aid of an alcohol. In this reaction, the polyester can be prepared similarly by substituting allyl glycidyl ether for the epoxy compound.

Polyesters with terminal acryloyl groups (or methacryloyl groups) may be produced according to known methods by condensation of a diol, a dibasic acid and an acrylic acid (or methacrylic acid).

Vinyl polymers with C—C double bonds can be obtained by a radical homopolymerization of allyl acrylate, allyl methacrylate or the like or by copolymerization of vinyl compounds such as styrene, α-methyl styrene, acrylic acid, acrylic ester, methacrylic acid, methacrylic ester, acrylamide, vinyl acetate, ethylene, maleic anhydride.

The diallyl phthalate compounds having C—C double bonds specified in this invention include diallyl phthalate prepolymers. Commercially available diallyl phthalate compounds may be used. Diallyl phthalate copolymers with C—C double bonds may be prepared by copolymerizing diallyl phthalate with an acrylic ester or methacrylic ester in the presence of catalysts such as azo or peroxide compounds; in this case the number of C—C double bonds can be controlled by varying the amount of the diallyl phthalate used in the reaction.

Silanes, i.e. compounds containing at least one hydrogen atom bonded to a silicon atom, include silane halides, such as trichlorosilane, methyl dichlorosilane, dimethyl chlorosilane, phenyl dichlorosilane, alkoxy silanes, such as trimethoxy silane, triethoxy silane, methyl dimethoxy silane, methyl diethoxy silane, phenyl dimethoxy silane, acyloxy silanes, such as methyl diacetoxy silane, phenyl diacetoxy silane, ketoximate silanes, such as bis(dimethyl ketoximate)methyl silane, bis(cyclohexyl ketoximate)methyl silane. When organohalogen silanes are used, they are substituted by other hydrolysable groups after hydrosilylation.

Vinyl polymers with silyl groups are obtained by copolymerizing a silyl compound and a vinyl compound, for instance, γ-methacryloxypropyl trimethoxy silane or γ-methacryloxypropyl methyldimethoxysilane and styrene α-methyl styrene, acrylic acid, acrylic ester, methacrylic acid, methacrylic ester, acrylamide, vinyl acetate, ethylene or maleic anhydride. Polymers with silyl groups may also be produced by reacting an organic polymer having epoxy groups — for instance an epoxy polymer or a copolymer of glycidyl methacrylate and a vinyl compound — with γ-aminopropyl trimethoxysilane, or else by reacting organic polymers such as a carboxylated polyester or a vinyl polymer with γ-glycidoxypropyl trimethoxysilane.

The hydrolysable esters of this invention are preferably trialkyl formates, more preferably trimethyl orthoformate, triethyl orthoformate, tripropyl orthoformate, tributyl orthoformate and tetralkyl orthosilicate, most preferably tetramethyl orthosilicate, tetraethyl orthosilicate, tetrapropyl orthosilicate and tetrabutyl orthosilicate.

Such hydrolysable esters are more readily subject to hydrolysis than the compounds with condensable silyl groups when these two compounds are blended and stored in the presence of moisture. Therefore, the former prevents the latter from hydrolysis, which seems to be the reason for the improved shelf stability of the composition of the invention.

In addition, it has already been disclosed in Japanese Patent Application No. 25728/1979 that the alcohols released from the esters by hydrolysis also improve the stability of the silyl groups-containing compound. As a matter of fact, however, the rate of hydrolysis, the pH which influences the rate of hydrolysis, and the mechanical properties of the product vary depending on the type of ester used. In short, an alkyl orthoformate is easily hydrolysed in a slightly acidic medium; therefore, it does not penetrate into the hardened matrix and is easily removed from the reaction system as a volatile component.

Contrary thereto, a tetralkyl orthosilicate is hydrolysed in a slightly alkaline medium; the hydrolysed product

condenses with the silyl groups-containing compound as a low molecular cross-linking agent, which is effective to improve the solvent-resistance and increases the hardness of the product.

As mentioned above, addition of the hydrolysable ester improves the stability of the silyl groups-containing compound. Moreover, it is the characteristic of the present invention that the hydrolysable esters hardly influence the hardening and curing rate of the composition, because they evaporate out of the reaction system as a volatile component, or enter into the matrix while hardening is taking place.

The amount of the hydrolysable esters is not particularly limited in this invention and can be varied depending on the amount of moisture contained in the composition to be prepared. In most cases, the hydrolysable esters will do for the purpose when their amount exceeds 0.1%, preferably 0.5%. However, as the compound having hydrolysable silyl groups essentially tends to polymerize when exposed to moisture, it is preferred to take measures to minimize the penetration of moisture into the composition. From this standpoint, the amount of moisture should be reduced beforehand by dehydration to such an extent that the amount of the hydrolysable ester does not exceed 30 parts by weight per 100 parts by weight of the silyl groups-containing compound.

The main chain of the compound having silyl groups in the side chains may have any structure provided that the compound is selected from the group consisting of polyesters, vinyl polymers, diallyl phthalate compounds, diallyl phthalate copolymers or acrylic polymers, the effect of improving the stability of the silyl groups-containing compound by the hydrolysable esters does not depend on the type of the main chain structure.

The compositions of this invention have the characteristic that they harden at either ambient or high temperatures and can be used as paints such as repair paints for car bodies or bumpers, metal primers, anti-corrosive coats for bridges and construction materials, also as coating materials for galvanized iron, aluminum, glass, plastics, and rubber, and as adhesives. If desired, the composition of this invention can be mixed with pigments or fillers.

The present invention will be explained more in detail in the following examples which, however, are not to limit the scope of this invention.

The molecular weights stated in the examples are weight average molecular weights. They were measured according to the g.p.c. method (gel permeation column method).

Example 1

A 1-liter metal autoclave was charged with 148 g of phthalic anhydride, 46.4 g of propylene oxide, 22.8 g of allylglycidyl ether, 11.6 g of allyl alcohol, and 0.5 g of dimiethyl benzylamine. After the mixture had been reacted for 3 hours at 100°C, 46 g of propylene oxide were added to it, and the reaction was continued for 1 hour at 90°C. An excess amount of propylene oxide was then removed and a polyester with a molecular weight of 1,200 was obtained. 9.5 g of acetic anhydride were added to 100 g of this polyester and the mixture was maintained at 120°C for 2 hours. Then the excess amount of acetic anhydride was removed under reduced pressure. A mixture composed of 22.2 g of the polyester, 0.0035 g of chloroplatinic acid, and 8.65 g of methyl dichlorosilane was subjected to reaction at 80°C for 3 hours. Subsequently, an excess amount of methyl dichlorosilane was removed under reduced pressure to leave the product. Then 20 ml of methanol and 20 ml of methyl orthoformate were added to the residue. After reacting for 1 hour at room temperature, the silyl groups-containing polyester was obtained by removing volatile products under reduced pressure.

Example 2

A solution prepared by dissolving 2 g of azobisisobutyronitrile in a mixture of 30 g of styrene, 16 g of allyl methacrylate, 20 g of methyl methacrylate, 19 g of n-butyl methacrylate, 14 g of n-butyl acrylate, 2g of maleic anhydride and 2 g of n-dodecyl mercaptan was added dropwise to 100 g of toluene at 90°C. After 10 hours reaction, a vinyl polymer with allyl type double bonds, whose molecular weight proved to be 8,000, was obtained. The infrared absorption spectrum of this substance showed the band attributable to the C—C double bonds at 1648 $cm^{-1}$.

To 20 g of this vinyl polymer an isopropanol solution was added, which contained 0.0005 g of chloroplatinic acid and 1.5 g of methyl dimethoxysilane, and the reaction was conducted in a sealed reactor at 90°C for 6 hours. The infrared absorption spectrum of this substance lacked the band at 1648 $cm^{-1}$, which showed us the formation of the silyl groups-containing vinyl polymer.

Example 3

The silyl groups-containing diallyl phthalate copolymer was obtained through the same reaction as that in Example 2. In this case, however, the 16 g of allyl methacrylate were replaced by 31 g of diallyl phthalate.

Example 4

A solution prepared by dissolving 2 g of azobisisobutyronitrile in a mixture of 30 g of styrene, 27 g of γ-methacryloxypropyl trimethoxysilane, 20 g of methyl methacrylate, 19 g of n-butyl methacrylate, 14 g of n-butyl acrylate, 2 g of acrylamide, 2 g of n-dodecyl mercaptan, 5 g of n-butanol was added dropwise to 100 g of toluene at 100°C, and the reaction was conducted at 100°C for 10 hours. As a result of it, a vinyl polymer with silyl groups whose molecular weight was 9,000 was obtained.

Example 5

100 g of diallyl phthalate prepolymer (tradename "DAP L", a product of Osaka Soda Co., Ltd., iodine value: about 80), 0.00001 g of chloroplatinic acid, and 1 g of hydroquinone were dissolved in 100 ml of toluene. 35 ml of methyl diethoxy silane were added to this solution and the reaction was conducted at 90°C for 3 hours. As a result of it, a silyl groups-containing diallyl phthalate prepolymer was obtained.

Two hydrolysable esters — trimethyl orthoformate and tetraethyl orthosilicate — were added respectively to each of the five silyl groups-containing compounds obtained according to Examples 1 to 5. The solids content in each solution mixture was adjusted to 50% by adding toluene, and the moisture content was also set to 1,000 ppm. These closely prepared specimens were sealed in containers, respectively, and kept standing at 50°C for the period of one month. The table shows the results of the shelf stability test by measuring the specific viscosities of the inventive compositions and of a control composition to which no hydrolysable ester had been added. The table also includes a blend of two hydrolysable esters.

TABLE

| Example | Hydrolysable ester (pts. b. wt.) | | Specific viscosity [2)] |
|---|---|---|---|
| 1 | – | 0 | 3.0 |
| | OFM [1)] | 3 | 1.0 |
| | OSE [1)] | 3 | 1.0 |
| 2 | – | 0 | 10.0 |
| | OFM | 3 | 1.1 |
| | OSE | 3 | 1.1 |
| 2′ [3)] | – | 0 | ∞ |
| | OFM | 5 | 2.0 |
| | OFM + OSE | 5 + 5 | 1.1 |
| 3 | – | 0 | ∞ |
| | OFM | 3 | 1.4 |
| 4 | – | 0 | 20.0 |
| | OFM | 3 | 1.3 |
| 5 | – | 0 | ∞ |
| | OFM | 3 | 1.5 |

N.B.

1) OFM: trimethyl orthoformate
OSE: tetraethyl orthosilicate

2) Specific viscosity = $\frac{\eta \text{ (Viscosity after 1 month's storage)}}{\eta_0 \text{ (Viscosity before storage)}}$

3) In the modified Example 2′, an amount of non-treated titanium (R–820) was added to the silyl groups-containing compound in a proportion of 1 : 1, and the moisture content was made 9,000 ppm. Except for these two points, every condition in Example 2 was kept unchanged.

## Claims

1. A coating composition comprising an ester which hydrolyses in the presence of traces of moisture, and

at least one compound which contains in its molecule at least one silyl group having the following general formula

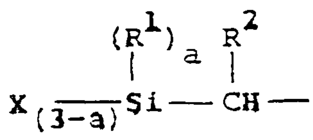

wherein $R^1$ and $R^2$ each represent a hydrogen atom or a monovalent alkyl, aryl or aralkyl group with 1 to 10 carbon atoms, X represnts an alkoxy, hydroxy, acyloxy, aminoxy, phenoxy, thioalkoxy or amino group and a is 0, 1 or 2, characterized in that the silyl groups-containing compound is a polyester having a molecular weight of from 300 to 8,000, a vinyl polymer having a molecular weight of from 300 to 9,000, a diallyl phthalate prepolymer with a molecular weight of not more than 20,000 or a diallyl phthalate copolymer.

2. The coating composition according to Claim 1, wherein said vinyl polymer contains an acrylic ester or methacrylic ester.

3. The coating composition according to Claim 1, wherein said vinyl polymer contains maleic anhydride.

4. The coating composition according to Claim 1, wherein said vinyl polymer contains acrylamide.

5. The coating composition according to Claim 1, wherein said diallyl phthalate copolymer is a copolymer containing diallyl phthalate and either an acrylic ester or a methacrylic ester.

6. The coating composition according to Claim 5, wherein the content of diallyl phthalate in the polymer is 5 to 100 mole %.

7. The coating composition according to Claim 1, wherein the ester which hydrolyses in the presence of traces of moisture is trialkyl orthoformate.

8. The coating composition according to Claim 1, wherein the ester which hydrolyses in the presence of traces of moisture is tetraalkyl orthosilicate.

9. The coating composition according to Claim 1, wherein the amount of the ester which hydrolyses in the presence of traces of moisture is 30 parts by weight or less per 100 parts by weight of the silyl groups-containing compound.

## Patentansprüche

1. Beschichtungsmasse, umfassend einen Ester, der in Gegenwart von Feuchtigkeitsspuren hydrolysiert, und mindestens eine Verbindung, die in ihrem Molekül mindestens eine Silylgruppe der folgenden allgemeinen Formel

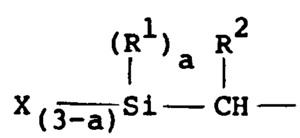

enthält, in der $R^1$ und $R^2$ je ein Wasserstoffatom oder einen einwertigen Alkyl-, Aryl- oder Aralkylrest mit 1 bis 10 Kohlenstoffatomen bedeuten, X einen Alkoxy-, Hydroxy-, Acyloxy-, Aminoxy-, Phenoxy-, Thioalkoxy oder Aminorest darstellt und a 0, 1 oder 2 ist, **dadurch gekennzeichnet**, daß die Silylgruppen enthaltende Verbindung ein Polyester mit einem Molekulargewicht von 300 bis 8000, ein Vinylpolymerisat mit einem Molekulargewicht von 300 bis 9000, ein Diallylphthalat-Vorpolymerisat mit einem Molekulargewicht von höchstens 20 000 oder ein Diallylphthalat-Copolymerisat ist.

2. Beschichtungsmasse nach Anspruch 1, in der das Vinylpolymerisat einen Acrylester oder Methacrylester enthält.

3. Beschichtungsmasse nach Anspruch 1, in der das Vinylpolymerisat Maleinsäureanhydrld enthält.

4. Beschichtungsmasse nach Anspruch 1, in der das Vinylpolymerisat Acrylamid enthält.

5. Beschichtungsmasse nach Anspruch 1, in der das Diallylphthalat-Copolymerisat ein Diallylphthalat und entweder einen Acrylester oder einen Methacrylester enthaltendes Copolymerisat ist.

6. Beschichtungsmasse nach Anspruch 5, in der der Gehalt an Diallylphthalat in dem Polymerisat 5 bis 100 Mol-% beträgt.

7. Beschichtungsmasse nach Anspruch 1, in der der Ester, der in Gegenwart von Feuchtigkeitsspuren hydrolysiert, ein Trialkylorthoformat ist.

8. Beschichtungsmasse nach Anspruch 1, in der der Ester, der in Gegenwart von Feuchtigkeitsspuren hydrolysiert, ein Tetraalkylorthosilikat ist.

9. Beschichtungsmasse nach Anspruch 1, in der die Menge des Esters, der in Gegenwart von Feuchtigkeitsspuren hydrolysiert, höchstens 30 Gew.-Teile pro 100 Gew.-Teile der Silylgruppen enthaltenden Verbindung beträgt.

## Revendications

1. Composition de revêtement comprenant un ester qui s'hydrolyse en présence de traces d'humidité et au moins un composé qui contient dans sa molécule au moins un groupe silyle répondans à la formule générale :

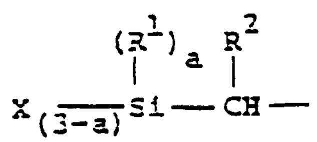

dans laquelle $R^1$ et $R^2$ représentent chacun un atome d'hydrogène ou un groupe alkyle, aryle ou aralkyle monovalent avec 1 à 10 atomes de carbone, X représente un groupe alcoxy, hydroxy, acyloxy, aminoxy, phénoxy, thioalcoxy ou amino et a vaut 0, 1 ou 2, caractérisée en ce que le composé contenant des groupes silyle est un polyester ayant un poids moléculaire de 300 à 8.000, un polymère vinylique ayant un poids moléculaire de 300 à 9.000, un prépolymère de diallyl phtalate avec un poids moléculaire ne dépassant pas 20.000 ou un copolymère de diallyl phtalate.

2. Composition de revêtement suivant la revendication 1, caractérisée en ce que le polymère vinylique contient un ester acrylique ou un ester méthacrylique.

3. Composition de revêtement suivant la revendication 1, caractérisée en ce que le polymère vinylique contient de l'anhydride maléique.

4. Composition de revêtement suivant la revendication 1, caractérisée en ce que le polymère vinylique contient de l'acrylamide.

5. Composition de revêtement suivant la revendication 1, caractérisée en ce que le copolymère de diallyl phtalate est un copolymère contenant du diallyl phtalate et soit un ester acrylique soit un ester méthacrylique.

6. Composition de revêtement suivant la revendication 5, caractérisée en ce que la teneur en diallyl phtalate du polymère est de 5 à 100 moles %.

7. Composition de revêtement suivant la revendication 1, caractérisée en ce que l'ester qui s'hydrolyse en présence de traces d'humidité est un trialkyl orthoformiate.

8. Composition de revêtement suivant la revendication 1, caractérisée en ce que l'ester qui s'hydrolyse en présence de traces d'humidité est un tétraalkyl orthosilicate.

9. Composition de revêtement suivant la revendication 1, caractérisée en ce que la quantité de l'ester qui s'hydrolyse en présence de traces d'humidité est de 30 parties en poids ou moins pour 100 parties en poids du composé contenant des groupes silyle.